# EUROPÄISCHE PATENTSCHRIFT

(11) **EP 1 728 006 B1**
(45) Veröffentlichungstag und Bekanntmachung des Hinweises auf die Patenterteilung: **22.02.2012**
(21) Anmeldenummer: 05707085.6
(22) Anmeldetag: 29.01.2005
(51) Int. Cl.: F16H 3/66

(54) **PLANETENGETRIEBE, INSBESONDERE DOPPELKUPPLUNSGETRIEBE IN PLANETENBAUWEISE**
PLANETARY TRANSMISSION, ESPECIALLY DUAL-CLUTCH PLANETARY TRANSMISSION
TRANSMISSION PLANETAIRE, EN PARTICULIER TRANSMISSION PLANETAIRE A EMBRAYAGE DOUBLE

(30) Priorität: 23.03.2004 DE 102004014081
(43) Veröffentlichungstag der Anmeldung: 06.12.2006
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2005/000902
(87) Internationale Veröffentlichungsnummer: WO 2005/098271

(56) Entgegenhaltungen:
- DE-A1- 3 131 138
- DE-B- 1 211 077
- US-A- 2 150 950
- US-A- 2 209 385
- US-A- 2 530 200
- US-A1- 2003 199 360
- US-B1- 6 669 596

## Beschreibung

Die Erfindung betrifft ein Planetengetriebe, insbesondere ein Doppelkupplungsgetriebe in Planetenbauweise mit mehreren Planetenradsätzen, mit wenigstens zwei reibschlüssigen Schaltelementen und mit mehreren formschlüssigen Schaltelementen.

Aus der Praxis sind Stufenautomatgetriebe bekannt, welche unter anderem in Planetengetriebebauweise oder in Vorgelegebauweise ausgeführt sind. In Planetengetriebebauweise ausgeführte Stufenautomatgetriebe sind vorzugsweise mit einem hydrodynamischen Drehmomentwandler als Anfahrelement sowie hauptsächlich mit reibschlüssigen Schaltelementen ausgebildet, so dass mit diesem Getriebetyp Schaltungen ohne Zugkraftunterbrechung durchführbar sind. Damit die im Antriebsstrang von der Antriebsmaschine in Richtung des Abtriebs zu führenden Drehmomente von den reibschlüssigen Schaltelementen übertragen werden können, müssen diese verhältnismäßig groß dimensioniert werden, wodurch jedoch nachteilhafterweise in den Schaltelementen auftretende Schleppverluste im Schlupfbetrieb oder im geöffneten Zustand der Schaltelemente groß sind. Da die reibschlüssigen Schaltelemente zudem meist auch hydraulisch betätigt werden, ist ein aufwändiges hydraulisches System mit einer hydraulischen Fördereinrichtung erforderlich, welches aufgrund einer Aufnahmeleistung der Fördereinrichtung und durch Leckageverluste zu einer Verschlechterung des Wirkungsgrades des Getriebes beiträgt. Die.Schleppveriuste sind durch einen Ersatz der reibschlüssigen Schaltelemente durch formschlüssige Schaltelemente reduzierbar, wobei die Gangstufenwechsel dann nachteilhafterweise nicht ohne Zugkraftunterbrechung durchführbar sind.

Um auch mit in Vorgelegebauweise ausgeführten Stufenautomatgetrieben zugkraftunterbrechungsfreie Schaltungen durchführen zu können, werden diese beispielsweise als so genannte Doppelkupplungsgetriebe ausgeführt. Dieser Getriebetyp weist zwei reibschlüssige Schaltelemente auf, mittels welchen im Getriebe abwechselnd zwei Leistungsstränge in den Kraftfluss des Getriebes zugeschaltet oder aus dem Kraftfluss abgeschaltet werden. In den beiden Leistungssträngen sind über formschlüssige. Schaltelemente Zahnradpaarungen mit verschiedenen Übersetzungen zu- bzw. abschaltbar, wobei die Übersetzungen der Leistungsstränge dann eingestellt bzw. verändert werden, wenn der betreffende Leistungsstrang gerade nicht in den Kraftfluss zugeschaltet ist und sich im lastfreien Zustand befindet. Im Bereich der verwendeten formschlüssigen Schaltelemente treten im Vergleich zu den reibschlüssigen Schaltelementen eines Planetengetriebes erheblich kleinere Schleppmomente auf, so dass hier weniger Verluste auftreten und ein Getriebegesamtwirkungsgrad in geringerem Umfang beeinträchtigt wird.

Die in Vorgelegebauweise ausgeführten Doppelkupplüngsgetriebe sind im Vergleich zu Planetengetrieben jedoch nachteilhafterweise durch eine niedrigere Leistungsdichte gekennzeichnet, weshalb sie bei gleicher Gangstufenanzahl mehr Bauraum benötigen, der jedoch besonders bei Kraftfahrzeugen nur begrenzt zur Verfügung steht.

Des Weiteren liegt ein Verzahnungswirkungsgrad eines Vorgelegegetriebes in etwa auf dem niedrigen Niveau eines Handschaltgetriebes, was durch den an sich bekannten zweifachen Stirnradeingriff bedingt ist. Im Gegensatz hierzu weisen Planetengetriebe einen gangabhängigen Verzahnungswirkungsgrad auf, der in Abhängigkeit des jeweilig verwendeten Radsatzschemas besonders in den Hauptfahrgängen höher ist als bei einem in Koaxialbauweise ausgeführten Vorgelegegetriebe.

Aus der DE 31 31 138 A1 ist ein lastschaltbares Planetenrad-Wechselgetriebe für Kraftfahrzeuge mit einer automatischen Getriebesteuerung und mit mehreren gekuppelten Planetenradsätzen sowie mit Schaltkupplungen und Schaltbremsen zur Bildung von Antriebssträngen mit unterschiedlichen Übersetzungen, in dem nur zwei Schaltkupplung, die z. B. an der Antriebswelle angeordnet als Lastschaltkupplungen eingerichtet sind und das Antriebsmoment im Prinzip über zwei Antriebsstränge wahlweise übertragen, bekannt. Die übrigen Schaltkupplungen und -bremsen können immer dann geschaltet werden, wenn sie nicht an der Übertragung des Drehmoments beteiligt sind. Durch geeignete Auswahl und Anordnung der gekoppelten Planetensätze, Schaltkupplungen und -bremsen im Zusammenhang mit den zwei lastschaltbaren Kupplungen ergibt sich eine hohe Mehrfachnutzung der einzelnen Bauelementen sowie ein einfacher Aufbau bei geeigneten Übersetzungen und eine vergleichbare hohe Gangzahl.

Das aus der DE 31 31 138 A1 bekannte lastschaltbare Planetenrad-Wechselgetriebe weist jedoch den Nachteil auf, dass die formschlüssigen Schaltelemente durch rotierende Bauteile des Planetenradgetriebes hindurch angesteuert werden, wodurch eine einwandfreie Funktionsweise nachteilhafterweise nur mit sehr hohem fertigungstechnischen Aufwand erreicht wird; was jedoch unerwünschterweise hohe Herstellungskosten verursacht.

Die DE 1211077B wird als nächst liegender Stand der Tecknik angesehen.

Der vorliegenden Erfindung liegt daher die Aufgabe zugrunde, ein Planetengetriebe zur Verfügung zu stellen, das kostengünstig herstellbar ist.

Erfindungsgemäß wird diese Aufgabe mit einem Planetengetriebe gemäß den Merkmalen des Patentanspruches 1 gelöst.

Das erfindungsgemäße Planetengetriebe mit mehreren Planetenradsätzen, mit wenigstens zwei reibschlüssigen Schaltelementen zum Zuschalten verschiedener Leistungspfade in einen Kraftfluss und mit mehreren formschlüssigen Schaltelementen zum Einstellen verschiedener Übersetzungsstufen in den Leistungspfaden, wobei die reibschlüssigen Schaltelemente und die formschlüssigen Schaltelemente derart zwischen Wellen der Planetenradsätze, einem Gehäuse sowie einer Getriebeeingangswelle und einer Getriebeausgangswelle angeordnet sind, dass Gangstufenwechsel zumindest in einem unteren Gangstufenbereich über die reibschlüssigen Schaltelemente zugkraftunterbrechungsfrei durchführbar sind und wobei wenigstens eines der reibschlüssigen Schaltelemente als Kupplung ausgeführt ist, ist im Vergleich zu aus dem Stand der Technik bekannten Planetengetrieben einfach und kostengünstig herstellbar.

Dies wird dadurch erreicht, dass die formschlüssigen Schaltelemente, die reibschlüssigen Schaltelemente und die Planetenradsätze derart im Gehäuse positioniert und miteinander in Wirkverbindung bringbar sind, dass eine Betätigung der formschlüssigen Schaltelemente ohne Durchgriff durch rotierende Bauteile des Planetengetriebes durchführbar ist.

Bei dem erfindungsgemäßen Planetengetriebes sind die reibschlüssigen Schaltelemente zwischen den formschlüssigen Schaltelementen und den Planetenradsätzen angeordnet, wobei die reibschlüssigen Schaltelemente mit ihren dem Getriebeausgang zugewandten Kupplungshälften direkt mit zwei unterschiedlichen Wellen der Planetenradsätze verbunden sind und mit ihren dem Getriebeeingang zugewandten Kupplungshälften mit den formschlüssigen Schaltelementen in Wirkverbindung stehen.

Mit dem erfindungsgemäßen Planetengetriebe sind vorteilhafterweise Schaltungen bzw. Gangstufenwechsel zumindest in einem unteren Gangstufenbereich bzw. einem Hauptfahrbereich zugkraftunterbrechungsfrei mit Getriebewirkungsgraden in den einzelnen Gangstufen durchführbar; die im Wesentlichen oberhalb eines Wirkungsgrades eines Vorgelegegetriebes liegen.

Dies wird dadurch erreicht, dass das Planetengetriebe nach der Erfindung mit mehreren Planetenradsätzen ausgeführt ist, die durch einen guten Verzahnungswirkungsgrad gekennzeichnet sind, und zudem in dem Planetengetriebe verschiedene Übersetzungsstufen bzw. Gangstufen durch Verbinden einzelner Wellen der Planetenradsätze über formschlüssige Schaltelemente eingestellt werden, die im Vergleich zu reibschlüssigen Schaltelementen durch geringere Schleppmomente gekennzeichnet sind.

Darüber hinaus sind zwei reibschlüssige Schaltelemente vorgesehen, mittels welchen verschiedene über die formschlüssigen Schaltelemente in dem Planetengetriebe generierbare Leistungspfade in den Kraftfluss zuschaltbar oder aus dem Kraftfluss abschaltbar sind, so dass die in einem aktuell nicht im Kraftfluss befindlichen Leistungspfad angeordneten formschlüssigen Schaltelemente lastfrei schaltbar sind und ein Wechsel von einem zugeschalteten Leistungspfad, der sich zur Darstellung der aktuellen Gangstufe im Kraftfluss des Planetengetriebes befindet, zu einem abgeschalteten Leistungspfad, in dem zur Darstellung einer neuen höheren oder niedrigeren Gangstufe verschiedene Wellen der Plantetenradsätze über die formschlüssigen Schaltelemente miteinander verbunden sind oder vorzugsweise mit einem gehäusefesten Bauteil verbunden sind, im Sinne einer Überschneidungsschaltung zugkraftunterbrechungsfrei durchführbar ist.

Dazu sind die reibschlüssigen Schaltelemente und die formschlüssigen Schaltelemente bei dem erfindungsgemäß ausgeführten Planetengetriebe derart angeordnet, dass verschiedene Übersetzungsstufen in dem Planetengetriebe jeweils in einem über ein reibschlüssiges Schaltelement lastfrei geschalteten Leistungspfad vor der Aufnahme in den Kraftfluss des Planetengetriebes einstellbar sind. Anschließend wird der Leistungspfad der.neuen Gangstufe durch Schließen des geöffneten reibschlüssigen Schaltelementes in den Kraftfluss des Getriebes aufgenommen, während der sich aktuell im Kraftfluss befindliche Leistungspfad der abzuschaltenden Gangstufe durch Öffnen des geschlossenen reibschlüssigen Schaltelementes aus dem Kraftfluss geführt wird.

Daran anschließend ist der Leistungspfad der abgeschalteten Gangstufe lastfrei, wodurch nunmehr die Möglichkeit besteht, die Übersetzung des lastfreien Leistungspfades des Planetengetriebes durch geeignetes Schalten der formschlüssigen Schaltelemente zu verändern. Das bedeutet wiederum, dass ein zugkraftunterbrechungsfreies Schalten bzw. ein zugkraftunterbrechungsfreier Gangstufenwechsel im erfindungsgemäßen Planetengetriebe durch wechselseitiges Zu- und Abschalten der beiden reibschlüssigen Schaltelemente in Verbindung mit einer Übersetzungsänderung unter lastfreien Bedingungen durchführbar ist.

Somit vereint das erfindungsgemäße Planetengetriebe die Vorteile eines herkömmlichen Planetengetriebes, d. h. eine hohe Leistungsdichte bei gleichzeitig günstigem Verzahnungswirkungsgrad, mit den Vorzügen eines in Vorgelegebauweise ausgeführten Doppelkupplungsgetriebes, bei welchem Schaltungen zugkraftunterbrechungsfrei mit niedrigen Schleppmomenten im Bereich der Schaltelemente durchführbar sind.

Vorteilhafte Weiterbildungen des Gegenstandes nach der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen ver-wendet werden.

Es zeigt:
- Fig. 1: ein Räderschema eines erfindungsgemäß ausgeführten Planetengetriebes;
- Fig. 2: ein Schaltschema der Schaltelemente des Räderschemas gemäß Fig. 1;
- Fig. 3: ein Räderschema eines weiteren Ausführungsbeispiels eines erfindungsgemäß ausgeführten Planetengetriebes;
- Fig. 4: ein Schaltschema der Schaltelemente des in Fig. 3 dargestellten Räderschemas;
- Fig. 5: ein Räderschema eines weiteren Ausführungsbeispiels eines erfindungsgemäß ausgeführten Planetengetriebes;
- Fig. 6: Schaltschema zu dem Räderschema gemäß Fig. 5;
- Fig. 7: eine stark schematisierte Darstellung eines reibschlüssigen Schaltelementes; und
- Fig. 8: ein Schaltschema zu dem Räderschema gemäß Fig. 5, welches mit dem in Fig. 7 gezeigten reibschlüssigen Schaltelement ausgeführt ist.

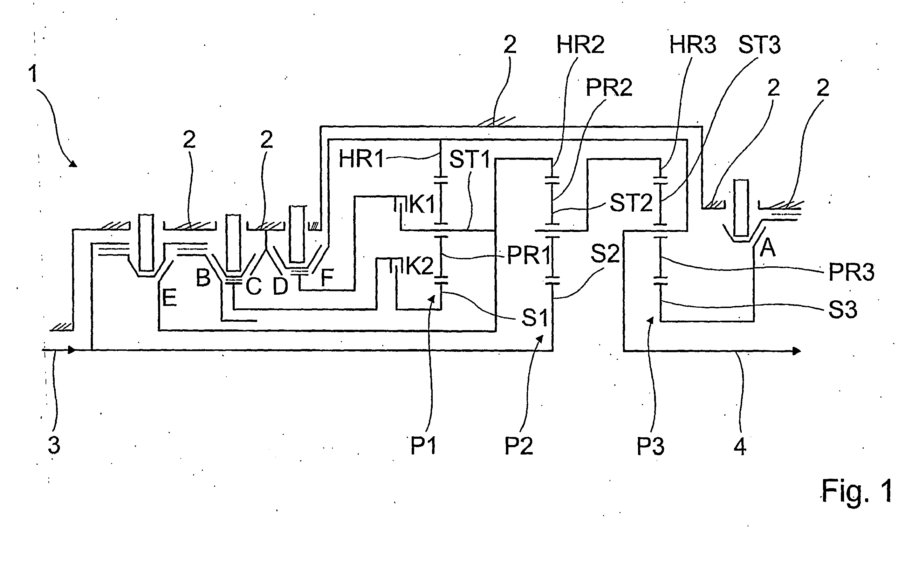

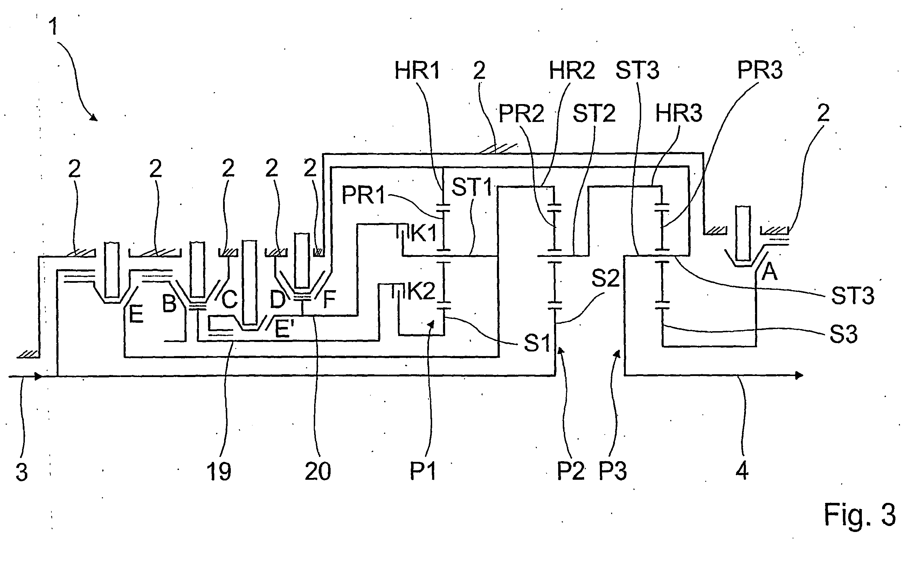

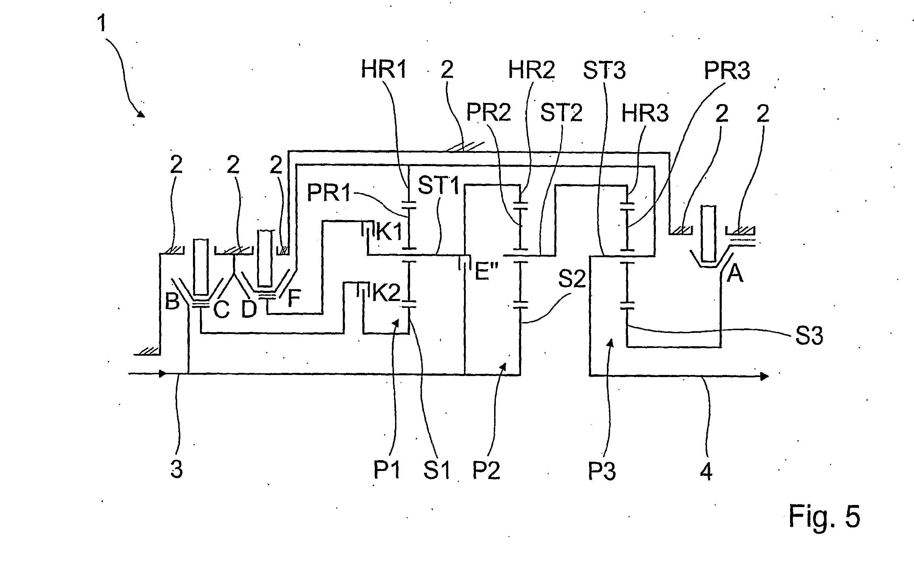

In Fig. 1, Fig. 3 und Fig. 5 sind jeweils Räderschemata von drei Ausführungsformen eines erfindungsgemäß ausgeführten Planetengetriebes 1 bzw. eines Doppelkupplungsgetriebes in Planetenbauweise mit drei Planetenradsätzen P1 bis P3, zwei reibschlüssigen Schaltelementen K1, K2 und mit mehreren formschlüssigen Schaltelementen A, B, C, D, E und F dargestellt, welche prinzipiell denselben Aufbau aufweisen, weshalb in der nachfolgenden Beschreibung zu Fig. 3 und Fig. 5 lediglich auf Unterschiede zu dem in Fig. 1 dargestellten Räderschema eingegangen wird.

Die Schaltelemente A, B, C, D, E und F sind in Abhängigkeit des jeweils vorliegenden Anwendungsfalles entweder als synchronisierte oder als nicht synchronisierte formschlüssige Schaltelemente ausführbar, wobei in der Ausführung als Synchronisierungen eventuell vorliegend Differenzdrehzahlen zwischen zwei über ein formschlüssiges Schaltelement zu verbindenden Bauteilen des Planetengetriebes 1 auf einfache Art und Weise ausgleichbar sind. Die reibschlüssigen Schaltelemente K1 und K2 sind vorliegend als reibschlüssige Lameitenkupplungen ausgeführt, wobei es selbstverständlich im Ermessen des Fachmannes liegt, die reibschlüssigen Schaltelemente K1 und K2 als nass- oder trockenlaufende Kupplungen auszuführen oder wenigstens eines der beiden Schaltelemente als reibschlüssige Bremse auszubilden.

Die reibschlüssigen Schaltelemente K1 und K2 sind zum Zuschalten verschiedener Leistungspfade in einen Kraftfluss des mit sieben Vorwärtsgängen und einem Rückwärtsgang ausgeführten Planetengetriebes 1 vorgesehen. Die formschlüssigen Schaltelemente A bis F sind zum Einstellen verschiedener Übersefizungsstufen in den Leistungspfaden des Planetengetriebes 1 angeordnet.

Bei dem in Fig. 1 dargestellten Planetengetriebe 1 sind die beiden reibschlüssigen Schaltelemente K1 und K2 zwischen den formschlüssigen Schaltelementen B, C, D, E und F und den drei Planetenradsätzen P1, P2 und P3 angeordnet. Des Weiteren bilden die drei Planetenradsätzen P1, P2 und P3 eine 3-Steg-6-Wellen-Getriebeeinheit aus. Die einzelnen Wellen der drei Planetenradsätze P1 bis P3 sind derart miteinander verbunden, dass die 3-Steg-6-Wellen-Getriebeeinheit vergleichsweise niedrige Stützfaktoren in den Schaltelementen des Planetengetriebes 1 verursacht und hohe Verzahnungswirkungsgrade in den jeweils eingestellten Übersetzungsstufen bei gleichzeitig niedrigen Planetendrehzahlen erreicht werden. Des Weiteren ist die aus den drei Planetenradsätzen P1 bis P3 gebildete Getriebeeinheit durch eine günstigen Stufung und eine.hohe Spreizung bei vergleichsweise niedrigem Bauaufwand gekennzeichnet.

Ein Steg ST1 des ersten Planetenradsatzes P1 ist mit einem Hohlrad HR2 des zweiten Planetenradsatzes P2 und ein Hohlrad HR1 des ersten Planetenradsatzes P1 ist mit einem Steg ST3 des dritten Planetenradsatzes P3 verbunden. Ein Sonnenrad S2 des zweiten Planetenradsatzes P2 ist mit der Getriebeeingangswelle 3 und ein Steg ST2 des zweiten Planetenradsatzes P2 ist mit einem Hohlrad HR3 des dritten Planetenradsatzes P3 verbunden.

Das erste reibschlüssige Schaltelement K1 ist vorliegend derart angeordnet, dass darüber das formschlüssige Schaltelement F oder das formschlüssige Schaltelement D und der Steg ST1 des ersten Planetenradsatzes P1 in Wirkverbindung bringbar sind. Über das zweite reibschlüssige Schaltelement K2 ist das formschlüssige Schaltelement B oder das formschlüssige Schaltelement C mit einem Sonnenrad S1 des ersten Planetenradsatzes P1 in Wirkverbindung bringbar.

Ein Sonnenrad S3 des dritten Planetenradsatzes P3 ist über das formschlüssige Schaltelement A mit einem gehäusefesten Bauteil bzw. dem Getriebegehäuse 2 des Planetengetriebes 1 verbindbar, so dass das Sonnenrad S3 nicht drehbar darstellbar ist.

Des Weiteren ist eine Getriebeeingangswelle 3 oder eine Kupplungshälfte des formschlüssigen Schaltelementes E bei geschlossenem Schaltelement B mit einer Kupplungshälfte des zweiten reibschlüssigen Schaltelementes K2 verbindbar. Zusätzlich ist das zweite reibschlüssige Schaltelement K2 über das formschlüssige Schaltelement C mit dem gehäusefesten Bauteil 2 verbindbar, so dass das Sonnenrad S1 des ersten Planetenradsatzes P1 gehäusefest ausführbar ist.

Bei geschlossenem formschlüssigen Schaltelement D ist das erste reibschlüssige Schaltelement K1 mit dem gehäusefesten Bauteil 2 verbunden, so dass der Steg ST1 des ersten Planetenradsatzes P1 bei gleichzeitig geschlosseinem ersten reibschlüssigen Schaltelement K1 gehäusefest ausgeführt ist.

Die Getriebeeingangswelle 3 ist über das formschlüssige Schaltelement E mit dem Steg ST1 des ersten Planetenradsatzes P1 sowie mit dem Hohlrad HR2 des zweiten Planetenradsatzes verbindbar. Das erste reibschlüssige Schaltelement K1 ist über das formschlüssige Schaltelement F mit dem Hohlrad HR1 des ersten Planetenradsatzes P1 sowie dem Steg ST3 des dritten Planetenradsatzes P3 verbindbar.

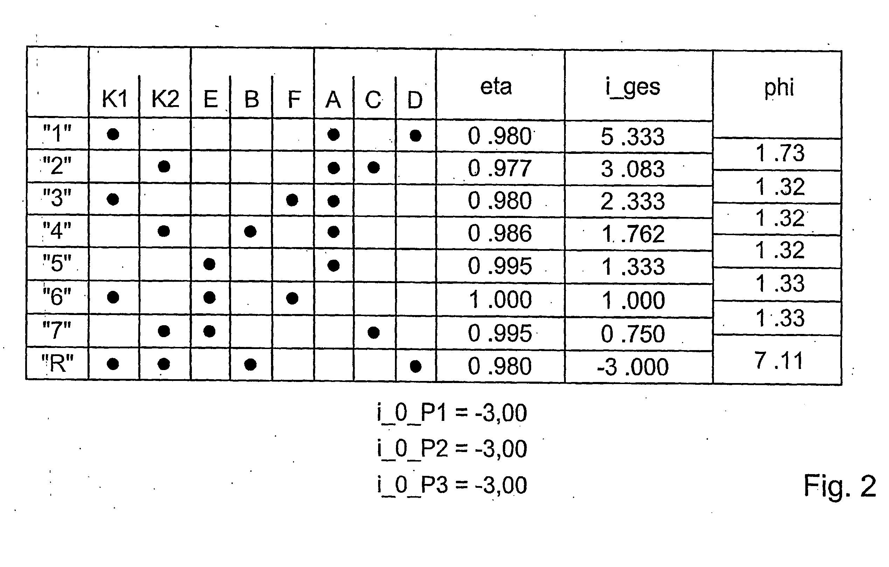

Fig. 2, Fig. 4 und Fig. 6 zeigen jeweils ein Schaltschema, welches den Zusammenhang zwischen den einzelnen Gangstufen "1" bis "7" und "R" des Planetengetriebes 1 gemäß Fig. 1, Fig. 3 bzw. Fig. 5 und der Schaltelemente A bis F sowie K1 und K2 wiedergeben.

Die Schaltschemata der Fig. 2, Fig. 4 und Fig. 6 sind in Form einer Tabelle wiedergegeben, in deren-Kopfspalte die einzelnen Gangstufen "1", "2", "3", "4,", "5", "6", "7" für Vorwärtsfahrt und "R" für Rückwärtsfahrt aufgeführt sind. Des Weiteren sind in der Kopfzeile der Schaltschemata die einzelnen Schaltelemente K1, K2, A, B, C, D, E, F, A', E' und E" ein Verzahnungswirkungsgrad eta des Planetengetriebes 1, eine Gesamtübersetzung i_ges des Planetengetriebes 1 bei der jeweilig eingestellten Gangstufe sowie ein Stufensprung phi, der jeweils aus einem Quotient aus den Werten zweier aufeinander folgender Gesamtübersetzungen i_ges gebildet ist, aufgeführt, Zusätzlich sind unterhalb der Schaltschemata so genannte Standübersetzungen i_0_P1 = -3,0, i_0_P2 = -3,0 und i_0_P3 = -3,0 der Planetenradsätze P1 bis P3 aufgeführt, mit welchen die angegebenen Gesamtübersetzungen i_ges in den jeweiligen Gangstufen und eine Gesamtspreizung von 7,11 erreicht werden

Diejenigen Schaltelemente des Planetengetriebes 1, welche zur Einstellung einer Gangstufe geschlossen sind, sind in den Schaltschemata durch einen schwarzen Punkt gekennzeichnet, wobei die Zellen der Schaltschemata, welche keinen Punkt aufweisen, die Schaltelemente kennzeichnen, die jeweils geöffnet sind.

Aus dem Schaltschema gemäß Fig. 2 geht in Verbindung mit dem in Fig. 1 dargestellten Räderschema des Planetengetriebes 1 beispielsweise hervor, dass zur Einstellung der ersten Gangstufe "1" bzw. der ersten Gesamtübersetzung i_ges des Planetengetriebes 1 die Schaltelemente K1, A und D geschlossen bzw. zugeschaltet sind. In diesem Betriebszustand des Planetengetriebes 1 wird ein über die Getriebeeingangswelle 3 in das Planetengetriebe 1 eingeleitetes Antriebsmoment einer Antriebsmaschine eines Fahrzeuges über den Steg ST1 des ersten Planetenradsatzes P1, das Hohlrad HR2, die Planetenräder PR2 und den Steg ST2 des zweiten Planetenradsatzes P2, das Hohlrad HR3 des dritten Planetenradsatzes P3 und über die Planetenräder PR3 des dritten Planetenradsatzes P3 auf den Steg ST3 des dritten Planetenradsatzes P3 und von dort auf die Getriebeausgangswelle 4 weiter geleitet. In diesem Schaltzustand.des Planetengetriebes 1 wird das Antriebsmoment der Getriebeeingangswelle 3 über einen über das erste reibschlüssige Schaltelement K1 zugeschalteten Leistungszweig des Planetengetriebes durch das Planetengetriebe 1 in Richtung des Abtriebs des Fahrzeugs geführt. Die in der ersten Gangstufe "1" eingestelfte Gesamtübersetzung i_ges des Planetengetriebes 1 weist den Wert 5,333 auf und das Planetengetriebe 1 wird mit einem Verzahnungswirkungsgrad eta von 0,980 betrieben.

Zur Darstellung der zweiten Gangstufe "2" sind die beiden formschlüssigen Schaltelemente A und C sowie das zweite reibschlüssige Schattetement K2 geschlossen, wobei ein Verzahnungswirkungsgrad eta des Planetengetriebes den Wert 0,977 annimmt und die Gesamtübersetzung i_ges=3,083 ist. Damit ergibt sich zwischen der ersten Gangstufe 1 und der zweiten Gangstufe 2 des Planetengetriebes 1 ein Stufensprung phi von 1,72.

Die Hochschaltung ausgehend von der ersten Gangstufe "1" in die zweite Gangstufe "2" des Planetengetriebes 1 ist mit dem in Fig. 1 dargestellten Planetengetriebe 1 ohne Zugkraftunterbrechung durchführbar, da bei einer entsprechenden Schaltanforderung zunächst das lastfreie formschlüssige Schaltelement C bei geöffnetem zweiten reibschlüssigen Schaltelement K2 geschlossen wird. Anschließend wird das zweite reibschlüssige Schaltelement K2 vorzugsweise entsprechend einer an sich bekannten Überschneidungsschaltung über eine Schlupfphase geschlossen, während gleichzeitig das erste reibschlüssige Schaltelement K1 in entsprechender Art und Weise geöffnet wird. Dabei werden die Übertragungsfähigkeiten der beiden reibschlüssigen Schaltelementen K1 und K2 derart von einem nicht näher dargestellten Steuergerät des Planetengetriebes 1 eingestellt, dass der Gangstufenwechsel zugkraftunterbrechungsfrei und mit hohem Fahrkomfort durchgeführt wird.

Nach Beendigung des Gangstufenwechsels bzw. der Hochschaltung wird das Antriebsmoment der Getriebeeingangswelle 3 über den nunmehr über das zweite reibschlüssige Schaltelement K2 in den Kraftfluss des Planetengetriebes 1 zugeschalteten Leistungspfad des Planetengetriebes 1 in Richtung der Getriebeausgangswelle 4 geführt. Das aufgrund des geöffneten ersten reibschlüssigen Schaiteiementes K1 lastfrei geschaltete formschlüssige Schaltelement D ist auf einfache Art und Weise öffenbar, so dass über das formschlüssige Schaltelement D kein Drehmoment mehr übertragbar ist.

Liegt eine weitere Schaltanforderung für eine Hochschaltung von der zweiten Gangstufe "2" in die dritte Gangstufe "3" des Planetengetriebes 1 vor, wird das bei geöffnetem ersten reibschlüssigen Schaltelement K1 sich in lastfreiem Zustand befindliche formschlüssige Schaltelement F geschlossen. Anschließend wird in der vorbeschriebenen Art und Weise die Übertragungsfähigkeit des ersten reibschlüssigen Schaltelementes K1 angehoben und die Übertragungsfähigkeit des zweiten reibschlüssigen Schaltelementes K2 reduziert, so dass der von dem zweiten reibschlüssigen Schaltelement K2 zugeschaltete Leistungspfad des Planetengetriebes 1 abgeschaltet wird und der nunmehr über das formschlüssige Schaltelement F und das formschlüssige Schaltelement A generierte neue Leistungspfad durch das erste reibschlüssige Schaltelement K1 in den Kraftfluss des Planetengetriebes 1 aufgenommen wird. Anschließend ist das bei geöffnetem zweiten reibschlüssigen Schaltelement K2 lastfrei geschaltete formschlüssige Schaltelement C auf einfache Art und Weise öffenbar.

Des Weiteren geht aus dem Schaltschema gemäß Fig. 2 hervor, dass das erste reibschlüssige Schaltelement K1 zur Darstellung der Gangstufen "1 ", "3", "6" sowie des Rückwärtsganges "R" geschlossen ist, während das zweite reibschlüssige Schaltelement K1 zur Darstellung der Gangstufen "2", "4", "7" und des Rückwärtsganges "R" geschlossen ist. Die Schaltungen, d. h. sowohl die Hochschaltungen als auch die Rückschaltungen zwischen den Gangstufen "1" bis "4" und "6" und "7" sind durch wechselseitiges Zu- und Abschalten der beiden reibschlüssigen Schaltelemente K1 und K2 zugkraftunterbrechungsfrei durchführbar, da zunächst die dem nächst höheren bzw. nächst niedrigeren Gang zugehörigen synchronisierten formschlüssigen Schaltelemente B, C, D und F lastfrei geschlossen werden und anschließend der Gangstufenwechsel durch Schließen des dem neuen Gang zugeordneten reibschlüssigen Schaltelementes K1 oder K2 bei gleichzeitigem Öffnen des dem aktuell eingelegten Gang zugeordneten anderen reibschlüssigen Schaltelementes K2 oder K1 erfolgt.

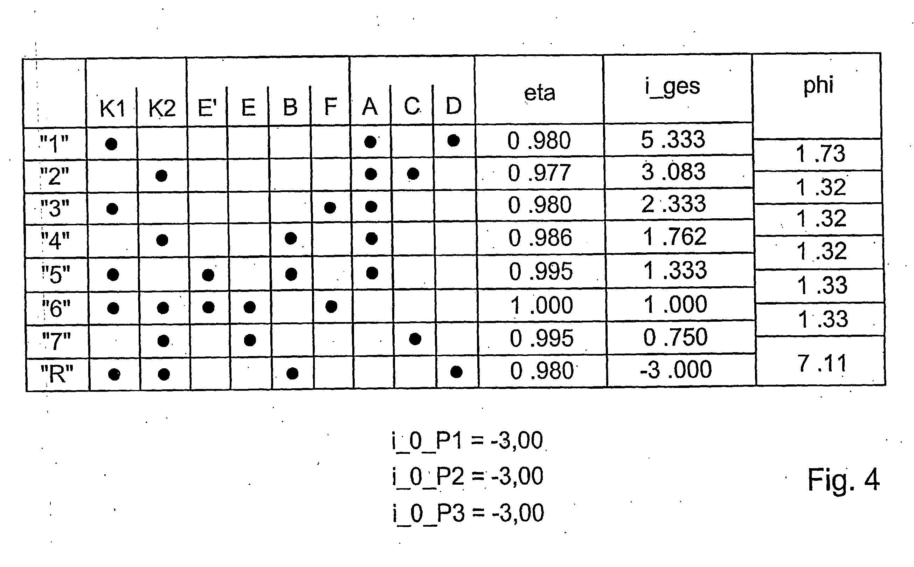

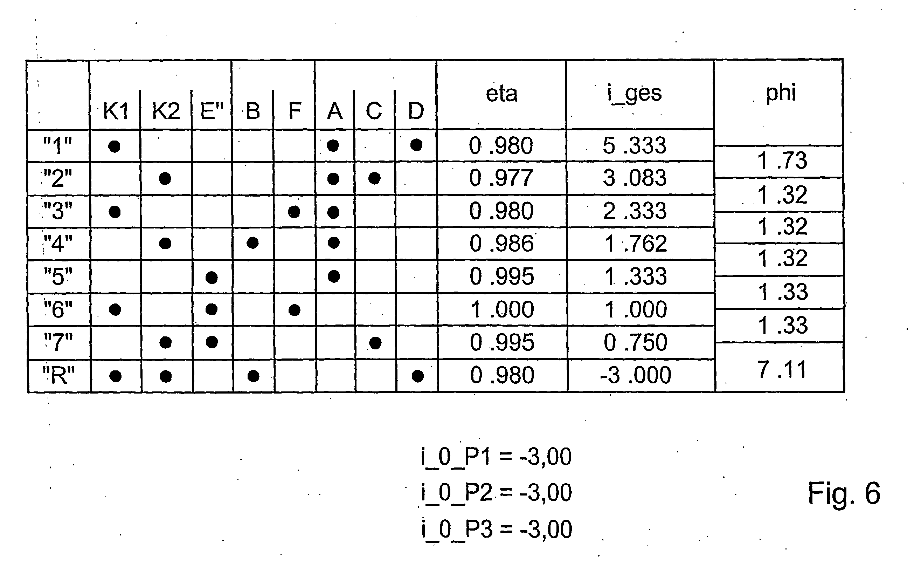

Lediglich die Gangstufenwechsel zwischen der vierten Gangstufe "4" und der fünften Gangstufe "5" sowie zwischen der fünften Gangstufe "5" und der sechsten Gangstufe "6" des Planetengetriebes 1 gemäß Fig. 1 sind nicht zugkraftunterbrechungsfrei durchführbar. Um auch in diesem Gangstufenbereich zugkraftunterbrechungsfrei schalten zu können, sind die in Fig. 3 und Fig. 5 dargestellten Planetengetriebe in der nachbeschriebenen Art und Weise in Teilbereichen abweichend von dem Planetengetriebe gemäß Fig.,1 ausgeführt, wobei die in Fig. 4 und Fig. 6 dargestellten Schaltschemata die jeweils mit den Planetengetrieben gemäß Fig. 3 und Fig. 5 korrespondierende Schaltlogik wiedergeben.

Das Planetengetriebe gemäß Fig. 3 ist mit einem weiteren synchronisierten formschlüssigen Schaltelement E' ausgestattet, dessen eine Kupplungshälfte an der gemeinsamen direkten Anbindung der zwischen den Schaltelementen B und C und dem ersten Planetenradsatz P1 verlaufenden Welle 19 und dessen andere Kupplungshälfte ausgangsseitig an einer zum ersten reibschlüssigen Schaltelement K1 führenden weiteren Welle 20 angebunden ist. Aufgrund des zusätzlichen synchronisierten formschlüssigen Schaltelementes E' besteht nunmehr die Möglichkeit, das Schaltelement E ohne Synchronisierung auszuführen. Ein Gangstufenwechsel zwischen der vierten Gangstufe "4" und der fünften Gangstufe "5" wird nunmehr durch Schließen des Schaltelementes E' in lastfreiem Zustand und einem sich daran anschließenden Schließen des ersten reibschlüssigen Schaltelementes K1 bei gleichzeitigem Öffnen des zweiten reibschlüssigen Schaltelementes K2 zugkraftunterbrechungsfrei durchgeführt.

Eine sich an eine Hochschaltung zwischen der vierten Gangstufe "4" und der fünften Gangstufe "5" anschließende weitere Hochschaltung in die sechste Gangstufe "6" erfolgt in derselben Art und Weise wie bei dem Planetengetriebe 1 gemäß Fig. 1, bei dem zum Öffnen des formschlüssigen Schaltelementes A und zum Schließen des formschlüssigen Schaltelementes F der Kraftfluss im Planetengetriebe 1 kurzfristig unterbrochen werden muss.

Zur Vorbereitung einer weiteren Hochschaltung zwischen der sechsten Gangstufe "6" und der siebten Gangstufe "7" wird das Schaltelement E ohne Drehzahldifferenz geschlossen. Die Verblockung des aus den drei Planetenradsätzen P1, P2 und P3 bestehenden Hauptradsatzes ist nun bei gleichzeitig geschlossenen Schaltelementen E, E', F und K1 gegeben, wobei zunächst das zweite reibschlüssige Schaltelement K2 geöffnet wird. Daran anschließend wird das Schaltelement E' im lastfreien Zustand geöffnet, wobei anschließend das Schaltelement C geschlossen werden kann. Wiederum daran anschließend erfolgt die eigentliche Hochschaltung zwischen der sechsten Gangstufe "6" und der siebten Gangstufe "7" durch Schließen des zweiten reibschlüssigen Schaltelementes K2 bei gleichzeitigem Öffnen des ersten reibschlüssigen Schaltelementes K1.

Das in Fig. 5 dargestellte Räderschema unterscheidet sich von dem in Fig. 1 dargestellten Räderschema des Planetengetriebes 1 dadurch, dass das formschlüssige Schaltelement E der Ausführung gemäß Fig. 1 nunmehr als reibschlüssige Kupplung E" ausgeführt ist, wobei eine Kupplungshälfte des Schaltelementes E" mit der Getriebeeingangswelle 3 und die andere Kupplungshälfte mit dem Steg ST1 des ersten Planetenradsatzes P1 sowie dem Hohlrad HR2 des zweiten Planetenradsatzes P2 verbunden ist.

Durch die Ausführung des Schaltelementes E" als reibschlüssige Kupplung ist ein Gangstufenwechsel zwischen der vierten Gangstufe "4" und der fünften Gangstufe "5" des Planetengetriebes 1 gemäß Fig. 9a durch Schließen des reibschlüssigen Schaltelementes E" und gleichzeitigem Öffnen des zweiten reibschlüssigen Schaltelementes K2 ohne Zugkraftunterbrechung durchführbar.

Die Hochschaltung zwischen der fünften Gangstufe "5" und der sechsten Gangstufe "6" erfolgt mit Zugkraftunterbrechung durch Schließen des Schaltelementes F und Öffnen des Schaltelementes A und anschließendes Schließen des ersten reibschlüssigen Schaltelementes K1. Die Hochschaltung ausgehend von der sechsten Gangstufe "6" in die siebte Gangstufe "7" wird wiederum durch lastfreies Schließen des Schaltelementes C und einem sich daran anschließenden Schließvorgang des zweiten reibschlüssigen Schaltelementes K2 bei gleichzeitigem Öffnen des ersten reibschlüssigen Schaltelementes K1 durchgeführt.

Die in Fig. 1, Fig. 3 und Fig. 5 dargestellten verschiedenen Ausführungsformen des erfindungsgemäßen Planetengetriebes 1 stellen Ausführungen dar, welche die bekannten Vorzüge eines Planetengetriebes, d. h. eine hohe Leistungsdichte mit günstigem Verzahnungswirkungsgrad, mit den Vorteilen eines Doppelkupplungsgetriebes, bei welchem Schaltungen zugkraftunterbrechungsfrei bei niedrigen Schleppmomenten im Bereich der Schaltelemente durchführbar sind, vereinen und weisen im Vergleich zu der aus der DE 31 31 138 A1 bekannten Lösung einen einfacheren Aufbau auf, da alle formschlüssigen Schaltelemente direkt, also ohne die zur Betätigung der formschlüssigen Schaltelemente vorgesehenen Schaltmuffen durch ein rotierendes Bauteil des Planetengetriebes hindurchführen zu müssen, angesteuert werden können.

Die in Fig. 1 bis Fig. 5 dargestellten Ausführungsformen des erfindungsgemäßen Planetengetriebes stellen ein Doppelkupptungsgetriebe in Planetenbauweise dar, welche neben vorzugsweise synchronisierten formschlüssigen Schaltelementen A bis F zwei als reibschlüssige Lamellenkupplungen ausgeführte Schaltelemente K1 und K2 sowie einen aus drei Planetenradsätzen P1 bis P3 bestehenden Hauptradsatz aufweisen. Im Unterschied zu dem aus der DE 31 31 138 A1 bekannten Planetengetriebe sind die Kupplungen K1 und K2 bei den Ausführungsbeispielen gemäß Fig. 1 bis Fig. 5 mit ihren dem Getriebeausgang zugewandten Kupplungshälften direkt an zwei unterschiedlichen, Wellen des Hauptradsatzes, d. h. dem Steg ST1 des ersten Planetenradsatzes P1 und dem Sonnenrad S1 des ersten Planetenradsatzes P1, angeschlossen und stehen mit ihren dem Getriebeeingang zugewandten Kupplungshälften mit den synchronisierten formschlüssigen Schaltelementen in Verbindung.

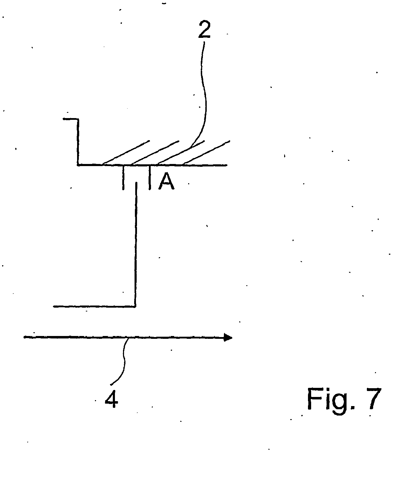

In Fig. 7 ist eine von dem in Fig. 1, Fig. 3 und Fig. 5 dargestellten formschlüssigen Schaltelement A abweichende Ausführungsform gezeigt, wobei das Schaltelement A in der in Fig. 10 dargestellten Art und Weise als reibschlüssige Bremse A' ausgeführt ist und somit das Sonnenrad S3 des dritten Planetenradsatzes P3 gegen das gehäusefeste Bauteil 2 bzw. das Getriebegehäuse des Planetengetriebes 1 abbremsbar ist. Dadurch können die Schaltungen zwischen der fünften Gangstufe "5" und der sechsten Gangstufe "6" zugkraftunterbrechungsfrei durchgeführt werden. Im fünften Gang "5" wird das formschlüssige Schaltelement F im lastfreien Zustand zugeschaltet. Durch Schließen des ersten reibschlüssigen Schaltelementes K1 und gleichzeitigem Öffnen der reibschlüssigen Bremse A' können nun die Schaltungen zwischen der fünften Gangstufe "5" und der sechsten Gangstufe "6" zugkraftunterbrechungsfrei durchgeführt werden.

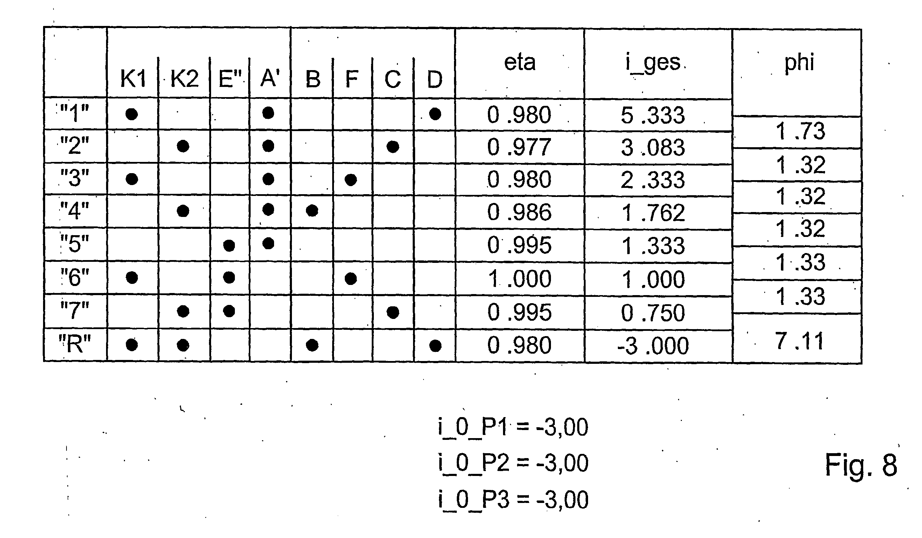

Des Weiteren zeigt Fig. 8 ein weiteres Schaltschema, welches prinzipiell dem in Fig. 6 dargestellten Schaltschema entspricht, wobei das formschlüssige Schaltelement A durch die in Fig. 7 dargestellte reibschlüssige Bremse A' ersetzt ist.

Bei allen in der Zeichnung dargestellten und in der Beschreibung näher erläuterten Ausführungsbeispielen des erfindungsgemäßen Planetengetriebes besteht durch eine geeignete Ansteuerung, vorzugsweise eine mechanische Ansteuerung, der formschlüssigen Schaltelemente die Möglichkeit, im Planetengetriebe eine derartige Überbestimmung zu erzeugen, dass die Getriebeabtriebswelle 4 arretiert ist und ein Abtrieb eines Fahrzeuges im Bereich des Planetengetriebes 1 drehfest gehalten wird. Dies wird beispielsweise dadurch erreicht, dass der Hauptradsatz durch gleichzeitiges Schließen mehrerer formschlüssiger Schaltelemente verblockt ist und sich im Gehäuse des Getriebes oder gegen das gehäusefeste Bauteil des Planetengetriebes abstützen kann. Mit dieser Vorgehensweise kann vorteilhafterweise auf eine herkömmliche Parksperreneinrichtung, wie sie in mit Automatgetrieben ausgeführten Fahrzeugen vorgesehen ist, verzichtet werden.

### Bezugszeichen

- 1: Planetengetriebe
- 2: Gehäusefestes Bauteil, Gehäuse.
- 3: Getriebeeingangswelle
- 4: Getriebeausgangswelle
- 19,20: Welle
- A, B, C, D, E, E', F: formschlüssiges Schaltelement
- eta: Verzahnungsverteilungsgrad
- F1: Kupplungshälfte des Schaltelementes F
- HR1, HR2, HR3, HR4, HR23: Hohlrad
- i_ges: Gesamtübersetzung
- K1, K2, A' E": reibschlüssiges Schaltelement
- phi: Gangsprung
- P1, P2, P3: Planetenradsatz
- PR1, PR2, PR3: Planetenrad
- "R": Rückwärtsgang
- S1, S2, S3: Sonnenrad
- ST1, ST2, ST3: Steg
- "1" bis "7": Gangstufe

## Patentansprüche

1. Planetengetriebe (1), insbesondere Doppelkupptungsgetriebe in Planetenbauweise, mit mehreren Planetenradsätzen (P1, P2, P3), mit wenigstens zwei reibschlüssigen Schaltelementen (K1, K2) zum Zuschalten verschiedener Leistungspfade in einen Kraftfluss und mit mehreren formschlüssigen Schaltelementen (A bis F) zum Einstellen verschiedener Übersetzungsstufen in den Leistungspfaden, wobei die reibschlüssigen Schaltelemente (K1, K2) und die formschlüssigen Schaltelemente (A bis F) derart zwischen Wellen (S1 bis S3, ST1 bis ST3, HR1 bis HR3) der Planetenradsätze (P1 bis P4), einem Gehäuse (2) sowie einer Getriebeeingangswelle (3) und einer Getriebeausgangswelle (4) angeordnet sind, dass Gangstufenwechsel zumindest in einem unteren Gangstufenbereich ("1" bis "4") Ober die reibschlüssigen Schaltelemente (K1, K2) zugkraftunterbrechungsfrei durchführbar sind, und wobei wenigstens eines der reibschlüssigen Schaltelemente (K1, K2) als Kupplung ausgeführt ist, wobei die formschlüssigen Schaltelemente (A bis F), die reibschlüssigen Schaltelemente (K1, K2) und die Planetenradsätze (P1 und P3) derart im Gehäuse positioniert und miteinander in Wirkverbindung bringbar sind, dass eine Betätigung der formschlüssigen Schaltelemente (A bis F) ohne einen Durchgriff durch rotierende Bauteile durchführbar ist, **dadurch gekennzeichnet, dass** die reibschlüssigen Schaltelemente (K1, K2) zwischen den formschlüssigen Schaltelementen (A bis F) und den Planetenradsätzen (P1 bis P3) angeordnet sind, wobei die reibschlüssigen Schaltelemente (K1, K2) mit ihren dem Getriebeausgang zugewandten Kupplungshälften direkt mit zwei unterschiedlichen Wellen (ST1, S1) der Planetenradsätze (P1 bis P3) verbunden sind und mit ihren dem Getriebeeingang zugewandten Kupplungshälften mit den formschlüssigen Schaltelementen (A bis F) in Wirkverbindung stehen.

2. Planetengetriebe nach Anspruch 1, **dadurch gekennzeichnet, dass** wenigstens eines der reibschlüssigen Schaltelemente als Bremse ausgebildet ist.

3. Planetengetriebe nach Anspruch 1 oder 2, **dadurch gekennzeichnet, dass** die reibschlüssigen Schaltelemente (K1, K2) nass- oder trockenlaufend ausgeführt sind.

4. Planetengetriebe nach Anspruch 1, 2 oder 3, **dadurch gekennzeichnet, dass** die formschlüssigen Schaltelemente (A bis F) als synchronisierte Schaltelemente ausgeführt sind.

5. Planetengetriebe nach einem der Ansprüche 1 bis 4, **dadurch gekennzeichnet, dass** die formschlüssigen Schaltelemente (A bis F) zwischen einer Getriebeeingangswelle (3) und den reibschlüssigen Schaltelementen (K1, K2) positioniert sind.

6. Planetengetriebe nach einem derAnsprüche 1 bis 5, **dadurch gekennzeichnet, dass** der erste Planetenradsatz (P1), ein zweiter Planetenradsatz (P2) und ein dritter Planetenradsatz (P3) eine 3-Steg-6-Wellen-Getriebeeinheit ausbilden.

7. Planetengetriebe nach Anspruch 6, **dadurch gekennzeichnet, dass** ein Steg (ST1) des ersten Planetenradsatzes (P1) mit einem Hohlrad (HR2) des zweiten Planetenradsatzes (P2) verbunden ist, dass das Hohlrad (HR1) des ersten Planetenradsatzes (P1) mit einem Steg (ST3) des dritten Planetenradsatzes (P3) verbunden ist, dass das Sonnenrad (S2) des zweiten Planetenradsatzes (P2) mit der Getriebeeingangswelle (3) wirkverbunden ist, dass der Steg (ST2) des zweiten Planetenradsatzes (P2) mit einem Hohlrad (HR3) des dritten Planetenradsatzes (P3) verbunden ist, und dass der Steg (ST3) des dritten Planetenradsatzes (P3) mit der Getriebeausgangswelle (4) verbunden ist.

8. Planetengetriebe nach Anspruch 6 oder 7, **dadurch gekennzeichnet, dass** über das erste reibschlüssige Schaltelement (K1) ein erstes formschlüssiges Schaltelement (F) oder ein zweites formschlüssiges Schaltelement (D) und der Steg (ST1) des ersten Planetenradsatzes (P1) in Wirkverbindung bringbar sind.

9. Planetengetriebe nach Anspruch 6, 7 oder 8, **dadurch gekennzeichnet, dass** über das zweite reibschlüssige Schaltelement (K2) ein erstes formschlüssiges Schaltelement (B) oder ein zweites formschlüssiges Schaltelement (C) und das Sonnenrad (S1) des ersten Planetenradsatzes (P1) verbindbar sind.

10. Planetengetriebe nach einem der Ansprüche 6 bis 9, **dadurch gekennzeichnet, dass** das Sonnenrad (S3) des dritten Planetenradsatzes (P3) über ein formschlüssiges oder reibschlüssiges Schaltelement (A, A') mit einem gehäusefesten Bauteil (2) verbindbar ist.

11. Planetengetriebe nach einem der Ansprüche 6 bis 10, **dadurch gekennzeichnet, dass** die Getriebeeingangswelle (3) über ein formschlüssiges Schaltelement (B) mit dem zweiten reibschlüssigen Schaltelement (K2) verbindbar ist.

12. Planetengetriebe nach einem der Ansprüche 6 bis 11, **dadurch gekennzeichnet, dass** das zweite reibschlüssige Schaltelement (K2) über ein formschlüssiges Schaltelement (C) mit einem gehäusefesten Bauteil (2) verbindbar ist.

13. Planetengetriebe nach einem der Ansprüche 6 bis 12, **dadurch gekennzeichnet, dass** das erste reibschlüssige Schaltelement (K1) über ein formschlüssiges Schaltelement (D) mit einem gehäusefesten Bauteil (2) verbindbar ist.

14. Planetengetriebe nach einem der Ansprüche 6 bis 13, **dadurch gekennzeichnet, dass** die Getriebeeingangswelle (3) über ein formschlüssiges oder reibschlüssiges Schaltelement (E', E") mit dem Steg (ST1) des ersten Planetenradsatzes (P1) sowie mit dem Hohlrad (HR2) des zweiten Planetenradsatzes (P2) verbindbar ist.

15. Planetengetriebe nach einem der Ansprüche 6 bis 14, **dadurch gekennzeichnet, dass** das erste reibschlüssige Schaltelement (K1) über ein formschlüssiges Schaltelement (F) mit dem Hohlrad (HR1) des ersten Planetenradsatzes (P1) sowie mit dem Steg (ST3) des dritten Planetenradsatzes (P3) verbindbar ist.

16. Planetengetriebe nach einem der Ansprüche 6 bis 14, **dadurch gekennzeichnet, dass** das erste reibschlüssige Schaltelement (K1) über zwei formschlüssige Schaltelemente (E' und B) mit der Getriebeeingangswelle (3) verbindbar ist.

## Claims

1. Planetary transmission (1), in particular dual clutch planetary transmission, having a plurality of planet gear sets (P1, P2, P3), having at least two frictionally engaging shift elements (K1, K2) for connecting various power paths into a force flow and having a plurality of positively engaging shift elements (A to F) for setting different transmission ratio stages in the power paths, wherein the frictionally engaging shift elements (K1, K2) and the positively engaging shift elements (A to F) are arranged between shafts (S1 to S3, ST1 to ST3, HR1 to HR3) of the planet gear sets (P1 to P4), a housing (2) and a transmission input shaft (3) and a transmission output shaft (4) in such a way that gear stage shifts can be carried out without an interruption in tractive force by means of the frictionally engaging shift elements (K1, K2) at least in a lower gear stage range ("1" to "4"), and wherein at least one of the frictionally engaging shift elements (K1, K2) is designed as a clutch, wherein the positively engaging shift elements (A to F), the frictionally engaging shift elements (K1, K2) and the planet gear sets (P1 and P3) are positioned in the housing, and can be placed in operative connection with one another, in such a way that an actuation of the positively engaging shift elements (A to F) can be carried out without penetration through rotating components, **characterized in that** the positively engaging shift elements (K1, K2) are arranged between the positively engaging shift elements (A to F) and the planet gear sets (P1 to P3), wherein the frictionally engaging shift elements (K1, K2) are operatively connected with their clutch halves facing towards the transmission output directly to two different shafts (ST1, S1) of the planet gear sets (P1 to P3) and with their clutch halves facing towards the transmission input to the positively engaging shift elements (A to F).

2. Planetary transmission according to Claim 1, **characterized in that** at least one of the frictionally engaging shift elements is designed as a brake.

3. Planetary transmission according to Claim 1 or 2, **characterized in that** the frictionally engaging shift elements (K1, K2) are of wet-running or dry-running design.

4. Planetary transmission according to Claim 1, 2 or 3, **characterized in that** the positively engaging shift elements (A to F) are designed as synchronized shift elements.

5. Planetary transmission according to one of Claims 1 to 4, **characterized in that** the positively engaging shift elements (A to F) are positioned between a transmission input shaft (3) and the frictionally engaging shift elements (K1, K2).

6. Planetary transmission according to one of Claims 1 to 5, **characterized in that** the first planet gear set (P1), a second planet gear set (P2) and a third planet gear set (P3) form a 3-web 6-shaft transmission unit.

7. Planetary transmission according to Claim 6, **characterized in that** a web (ST1) of the first planet gear set (P1) is connected to an internal gear (HR2) of the second planet gear set (P2), **in that** the internal gear (HR1) of the first planet gear set (P1) is connected to a web (ST3) of the third planet gear set (P3), **in that** the sun gear (S2) of the second planet gear set (P2) is operatively connected to the transmission input shaft (3), **in that** the web (ST2) of the second planet gear set (P2) is connected to an internal gear (HR3) of the third planet gear set (P3), and **in that** the web (ST3) of the third planet gear set (P3) is connected to the transmission output shaft (4).

8. Planetary transmission according to Claim 6 or 7, **characterized in that** a first positively engaging shift element (F) or a second positively engaging shift element (D) and the web (ST1) of the first planet gear set (P1) can be placed in operative connection by means of the first frictionally engaging shift element (K1).

9. Planetary transmission according to Claim 6, 7 or 8, **characterized in that** a first positively engaging shift element (B) or a second positively engaging shift element (C) and the sun gear (S1) of the first planet gear set (P1) can be connected by means of the second frictionally engaging shift element (K2).

10. Planetary transmission according to one of Claims 6 to 9, **characterized in that** the sun gear (S3) of the third planet gear set (P3) can be connected by means of a positively engaging or frictionally engaging shift element (A, A') to a component (2) fixed with respect to the housing.

11. Planetary transmission according to one of Claims 6 to 10, **characterized in that** the transmission input shaft (3) can be connected by means of a positively engaging shift element (B) to the second frictionally engaging shift element (K2).

12. Planetary transmission according to one of Claims 6 to 11, **characterized in that** the second frictionally engaging shift element (K2) can be connected by means of a positively engaging shift element (C) to a component (2) fixed with respect to the housing.

13. Planetary transmission according to one of Claims 6 to 12, **characterized in that** the first frictionally engaging shift element (K1) can be connected by means of a positively engaging shift element (D) to a component (2) fixed with respect to the housing.

14. Planetary transmission according to one of Claims 6 to 13, **characterized in that** the transmission input shaft (3) can be connected by means of a positively engaging or frictionally engaging shift element (E', E'') to the web (ST1) of the first planet gear set (P1) and to the internal gear (HR2) of the second planet gear set (P2).

15. Planetary transmission according to one of Claims 6 to 14, **characterized in that** the first frictionally engaging shift element (K1) can be connected by means of a positively engaging shift element (F) to the internal gear (HR1) of the first planet gear set (P1) and to the web (ST3) of the third planet gear set (P3).

16. Planetary transmission according to one of Claims 6 to 14, **characterized in that** the first frictionally engaging shift element (K1) can be connected by means of two positively engaging shift elements (E' and B) to the transmission input shaft (3).

## Revendications

1. Transmission planétaire (1), en particulier transmission à embrayage double de construction planétaire, comprenant plusieurs trains planétaires (P1, P2, P3) avec au moins deux éléments de changement de vitesse à engagement par friction (K1, K2) pour raccorder différentes voies de puissance dans un flux de force et avec plusieurs éléments de changement de vitesse à engagement positif (A à F) pour l'ajustement de différents rapports de démultiplication dans les voies de puissance, les éléments de changement de vitesse à engagement par friction (K1, K2) et les éléments de changement de vitesse à engagement positif (A à F) étant disposés entre des arbres (S1 à S3, ST1 à ST3, HR1 à HR3) des trains planétaires (P1 à P4), un boîtier (2) ainsi qu'un arbre d'entrée de transmission (3) et un arbre de sortie de transmission (4), de telle sorte que des changements de rapports de vitesses puissent être effectués au moins dans une plage de rapports de vitesses inférieure ("1" à "4") sans interruption de la force de traction par le biais des éléments de changement de vitesse à engagement par friction (K1, K2), et au moins l'un des éléments de changement de vitesse à engagement par friction (K1, K2) étant réalisé sous forme d'embrayage, les éléments de changement de vitesse à engagement positif (A à F), les éléments de changement de vitesse à engagement par friction (K1, K2) et les trains planétaires (P1 et P3) étant positionnés dans le boîtier et pouvant être amenés en liaison fonctionnelle les uns avec les autres de telle sorte qu'un actionnement des éléments de changement de vitesse à engagement positif (A à F) puisse être effectué sans l'intervention de composants rotatifs, **caractérisée en ce que** les éléments de changement de vitesse à engagement par friction (K1, K2) sont disposés entre les éléments de changement de vitesse à engagement positif (A à F) et les trains planétaires (P1 à P3), les éléments de changement de vitesse à engagement par friction (K1, K2) étant connectés par leurs moitiés d'embrayage tournées vers la sortie de transmission directement à deux arbres différents (ST1, S1) des trains planétaires (P1 à P3), et étant en liaison fonctionnelle par leurs moitiés d'embrayage tournées vers l'entrée de transmission avec les éléments de changement de vitesse à engagement positif (A à F).

2. Transmission planétaire selon la revendication 1, **caractérisée en ce qu'**au moins l'un des éléments de changement de vitesse à engagement par friction est réalisé sous forme de frein.

3. Transmission planétaire selon la revendication 1 ou 2, **caractérisée en ce que** les éléments de changement de vitesse à engagement par friction (K1, K2) sont réalisés sous forme humide ou sèche.

4. Transmission planétaire selon la revendication 1, 2 ou 3, **caractérisée en ce que** les éléments de changement de vitesse à engagement positif (A à F) sont réalisés sous forme d'éléments de changement de vitesse synchronisés.

5. Transmission planétaire selon l'une quelconque des revendications 1 à 4, **caractérisée en ce que** les éléments de changement de vitesse à engagement positif (A à F) sont positionnés entre un arbre d'entrée de transmission (3) et les éléments de changement de vitesse à engagement par friction (K1, K2).

6. Transmission planétaire selon l'une quelconque des revendications 1 à 5, **caractérisée en ce que** le premier train planétaire (P1), un deuxième train planétaire (P2) et un troisième train planétaire (P3) forment une unité de transmission à 3 porte-satellites et 6 arbres.

7. Transmission planétaire selon la revendication 6, **caractérisée en ce qu'**un porte-satellite (ST1) du premier train planétaire (P1) est connecté à une couronne (HR2) du deuxième train planétaire (P2), **en ce que** la couronne (HR1) du premier train planétaire (P1) est connectée à un porte-satellite (ST3) du troisième train planétaire (P3), **en ce que** la roue solaire (S2) du deuxième train planétaire (P2) est en liaison fonctionnelle avec l'arbre d'entrée de transmission (3), **en ce que** le porte-satellite (ST2) du deuxième train planétaire (P2) est connecté à une couronne (HR3) du troisième train planétaire (P3), et **en ce que** le porte-satellite (ST3) du troisième train planétaire (P3) est connecté à l'arbre de sortie de transmission (4).

8. Transmission planétaire selon la revendication 6 ou 7, **caractérisée en ce qu'**un premier élément de changement de vitesse à engagement positif (F) ou un deuxième élément de changement de vitesse à engagement positif (D) et le porte-satellite (ST1) du premier train planétaire (P1) peuvent être amenés en liaison fonctionnelle par le biais du premier élément de changement de vitesse à engagement par friction (K1).

9. Transmission planétaire selon la revendication 6, 7 ou 8, **caractérisée en ce qu'**un premier élément de changement de vitesse à engagement positif (B) ou un deuxième élément de changement de vitesse à engagement positif (C) et la roue solaire (S1) du premier train planétaire (P1) peuvent être connectés par le biais du deuxième élément de changement de vitesse à engagement par friction (K2).

10. Transmission planétaire selon l'une quelconque des revendications 6 à 9, **caractérisée en ce que** la roue solaire (S3) du troisième train planétaire (P3) peut être connectée à un composant (2) fixé au boîtier par le biais d'un élément de changement de vitesse à engagement positif ou par friction (A, A').

11. Transmission planétaire selon l'une quelconque des revendications 6 à 10, **caractérisée en ce que** l'arbre d'entrée de transmission (3) peut être connecté par le biais d'un élément de changement de vitesse à engagement positif (B) au deuxième élément de changement de vitesse à engagement par friction (K2).

12. Transmission planétaire selon l'une quelconque des revendications 6 à 11, **caractérisée en ce que** le deuxième élément de changement de vitesse à engagement par friction (K2) peut être connecté à un composant (2) fixé au boîtier par le biais d'un élément de changement de vitesse à engagement positif (C).

13. Transmission planétaire selon l'une quelconque des revendications 6 à 12, **caractérisée en ce que** le premier élément de changement de vitesse à engagement par friction (K1) peut être connecté à un composant (2) fixé au boîtier par le biais d'un élément de changement de vitesse à engagement positif (D).

14. Transmission planétaire selon l'une quelconque des revendications 6 à 13, **caractérisée en ce que** l'arbre d'entrée de transmission (3) peut être connecté par le biais d'un élément de changement de vitesse à engagement positif ou par friction (E', E") au porte-satellite (ST1) du premier train planétaire (P1) ainsi qu'à la couronne (HR2) du deuxième train planétaire (P2).

15. Transmission planétaire selon l'une quelconque des revendications 6 à 14, **caractérisée en ce que** le premier élément de changement de vitesse à engagement par friction (K1) peut être connecté par le biais d'un élément de changement de vitesse à engagement positif (F) à la couronne (HR1) du premier train planétaire (P1) ainsi qu'au porte-satellite (ST3) du troisième train planétaire (P3).

16. Transmission planétaire selon l'une quelconque des revendications 6 à 14, **caractérisée en ce que** le premier élément de changement de vitesse à engagement par friction (K1) peut être connecté par le biais de deux éléments de changement de vitesse à engagement positif (E' et B) à l'arbre d'entrée de transmission (3).
